# EUROPEAN PATENT APPLICATION

(11) **EP 1 775 751 A2**
(43) Date of publication of application: **18.04.2007**
(21) Application number: 06122080.2
(22) Date of filing: 11.10.2006
(51) Int. Cl.: H01J 31/12, H01J 29/48

(54) **Light emitting device using electron emission and flat display apparatus using the same**

(30) Priority: 11.10.2005 KR 20050095487
(71) Applicant: Samsung SDI Co., Ltd., Suwon-si, Gyeonggi-do (KR)
(72) Inventor: Son, Seung-Hyun c/o Samsung SDI Co., Ltd., Suwon-si Gyeonggi-do (KR); Kim, Gi-Young c/o Samsung SDI Co., Ltd., Suwon-si Gyeonggi-do (KR)
(74) Representative: Read, Matthew Charles

(57) **Abstract**

Provided are a light emitting device using electron emission with a low driving voltage and high luminous efficiency, and a flat display apparatus using the light emitting device. In addition, a light emitting device using electron emission in which with a nano-sized gap can be formed with repeatability and have reliability is provided. The light emitting device includes: a plurality of PN junctions (34), each including a depletion layer having a predetermined thickness; an anode electrode (12) facing the depletion layer and separated from the depletion layer by a predetermined distance; and a phosphor layer (13) formed on a surface of the anode electrode. The flat display apparatus includes the light emitting device.

## Description

This invention relates to a light emitting device using electron emission and a flat display apparatus using the same.

A plasma display panel (PDP), which is a flat display apparatus, forms an image using an electrical discharge. PDPs are used widely due to their superior display properties such as high brightness and large viewing angle.. PDPs may be classified as facing discharge type or surface discharge type according to the arrangement of electrodes. A facing discharge type PDP has a structure in which a pair of sustain electrodes are respectively formed on an upper substrate and a lower substrate, and discharge occurs perpendicular to the substrate. A surface discharge type PDP has a structure in which a pair of sustain electrodes are formed on the same substrate, and discharge occurs parallel to the substrate. In a PDP, an AC or DC voltage is applied between electrodes to cause a gas discharge, and visible light is emitted from a phosphor material excited by ultraviolet (UV) rays generated by the gas discharge.

In conventional PDPs constructed as above, plasma discharge occurs when a discharge gas containing Xe is ionized and then drops from its excited state, thereby emitting UV rays. However, conventional PDPs and flat lamps operated by plasma discharge require sufficiently high energy to ionize the discharge gas, and thus, have a high driving voltage and low luminous efficiency.

Generally, light emitting devices using electron emission use a thermal cathode or a cold cathode as an electron emission source. Light emitting devices that use a cold cathode as an electron emission source include field emitter array (FEA) type devices, surface conduction emitter (SCE) type devices, metal insulator metal (MIM) type devices, metal insulator semiconductor (MIS) type devices, ballistic electron surface emitting (BSC) type devices, etc.

SCE type light emitting devices using electron emission are self light-emitting displays such as field emission devices (FEDs), cathode-ray tubes (CRTs), and PDPs. The gradation rates of SCE type light emitting devices are higher than those of PDPs. Thus, SCE type light emitting devices can provide natural color presentation. In addition, SCE type light emitting devices have a quick response time, which is one of the drawbacks of liquid crystal displays (LCDs), and do not produce residual images, even when there is fast motion, as in, for example, sports programs. Also, even when implemented as large screens of greater than 40 inches, SCE type light emitting devices are thinner than CRTs. Further, since SCE type light emitting devices generally have low power consumption, they are receiving a lot of attention as next-generation displays.

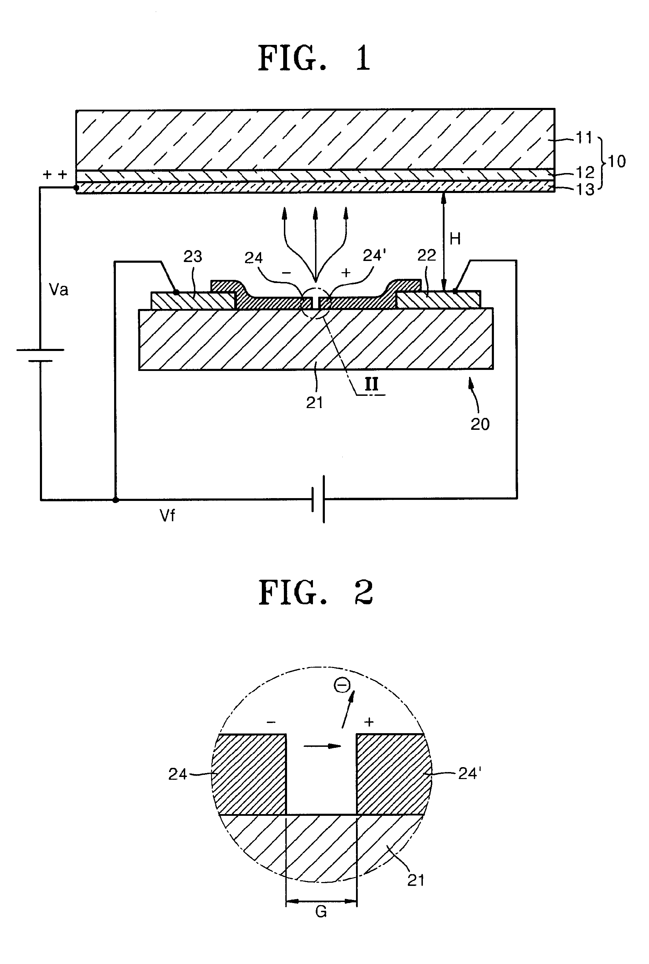

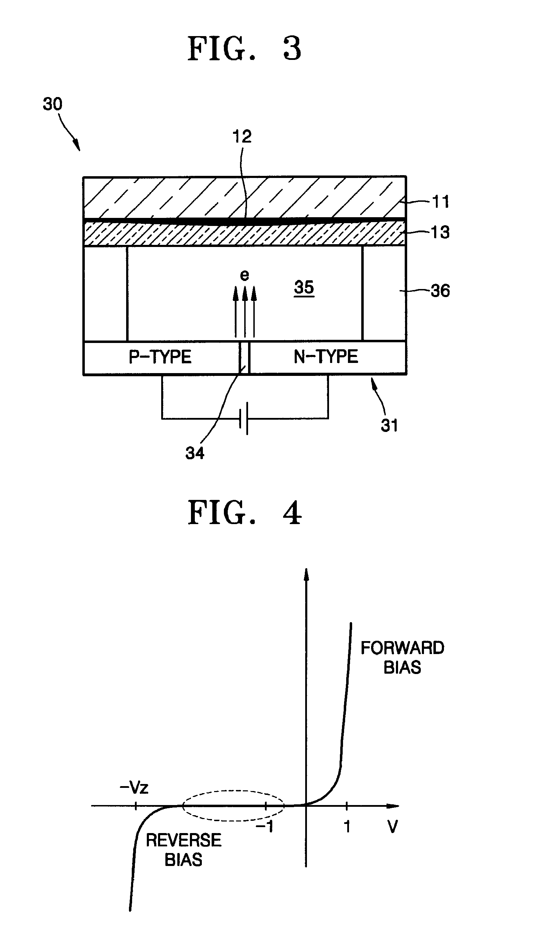

Figure 1 is a schematic cross-sectional view of a conventional SCE type light emitting device using electron emission as disclosed in U.S. Patent Publication No. 2002-0028285 by Banno, Yoshikazu et al.. Figure 2 is an enlarged view of a portion II of Figure 1.

Referring to Figure 1, the conventional SCE type light emitting device using electron emission includes a first panel 10 and a second panel 20. The first panel includes a transparent first substrate 11, a phosphor layer 12 formed on a surface of the first substrate 11, a protective layer 13 covering a surface of the phosphor layer 12, and an anode electrode (not shown) integrated into the phosphor layer 12. The second panel 20 includes a second substrate 21, a cathode electrode 23 and a gate electrode 22 opposite each other, and an electron emission source 24 interposed between the cathode electrode 23 and the gate electrode 22.

Referring to Figure 1 and 2, when a negative voltage is applied to the cathode electrode 23 and a positive voltage is applied to the gate electrode 22, electrons are emitted in the area between portions of the electron emission source 24, directed from the cathode electrode 23 toward the gate electrode 22. The emitted electrons travel toward the anode electrode due to an electric field generated by the high positive voltage which is applied to the anode electrode and collide with the phosphor layer 12, which is integrated with the anode electrode, thereby generating UV rays.

The conventional light emitting device structured as described above has a nano-sized gap between the cathode electrode 23 and the gate electrode 22 through which electrons are emitted due to an electron tunneling effect. The nano-sized gap is a crack in a thin film which is created after current is supplied to the thin film. However, a conventional method of forming a nano-sized gap has problems in terms of repeatability and/or reliability. Hence, a new light emitting device structured such that the nano-sized gap can be easily formed is required. In addition, a light emitting device using electron emission which can maximize brightness at a low driving voltage and thus achieve a higher luminous efficiency than a conventional light emitting device is required.

According to an aspect of the present embodiments, there is provided a light emitting device using electron emission, the device including: a plurality of PN junctions, each comprising a depletion layer having a predetermined thickness; an anode electrode facing the depletion layers and separated from the depletion layers by a predetermined distance; and a phosphor layer formed on a surface of the anode electrode.

The device may further include: a substrate supporting the anode electrode and the phosphor layer; and a spacer maintaining a gap between the PN junction and the substrate.

Alternatively, the device may further include: a first substrate on which the PN junctions are formed; a second substrate supporting the anode electrode and the phosphor layer; and a spacer maintaining a gap between the first substrate and the second substrate.

According to another aspect of the present embodiments, there is provided a light emitting device using electron emission, the device including: a monocrystalline substrate which is completely doped with p-type impurities, a plurality of PN junctions being formed in the monocrystalline substrate by diffusing n-type impurities into a surface of the monocrystalline substrate; an anode electrode opposite the monocrystalline substrate; and a phosphor layer formed on a surface of the anode electrode.

A space between the anode electrode and the PN junctions may be maintained in a vacuum, and the phosphor layer may be excited by accelerated electrons and generates visible light. In this case, the phosphor layer may be formed of cathode luminescence (CL)-type phosphors that includes a red phosphor selected from the group consisting of 'SrTiO₃:Pr,' 'Y₂O₃:Eu' or 'Y₂O₃S:Eu,' a green phosphor selected from the group consisting of 'Zn(Ga, Al)₂O₄:Mn,' 'Y₃(Al, Ga)₅O₁₂:Tb,' 'Y₂SiO₅:Tb' or 'ZnS:Cu,AI,' and a blue phosphor selected from the group consisting of 'Y₂SiO₅:Ce,' 'ZnGa₂O₄' or 'ZnS:Ag,CI.'

Alternatively, a space between the anode electrode and the PN junctions may be filled with an excitation gas, the excitation gas may be excited by the accelerated electrons, and the phosphor layer may be excited by ultraviolet (UV) rays emitted from the excitation gas and may generate the visible light. In this case, the excitation gas may be formed of at least one or more gases selected from the group consisting of Xe, N₂, D₂, CO₂, H₂, CO, Kr, and air. The phosphor layer may be formed of a photo luminescence (PL)-type phosphor that includes Y(V, P)O₄:Eu⁺³, a green phosphor selected from the group consisting of Zn₂SiO₄:Mn and YBO₃:Tb, and BaMgAl₁₀O₁₇:Eu.

The thickness of the depletion layer may be from about 1 nm to about 100 nm.

According to another aspect of the present embodiments, there is provided a flat display apparatus including: a light emitting device using electron emission which includes a plurality of PN junctions, each including a depletion layer having a predetermined thickness, an anode electrode facing the depletion layer and separated from the depletion layer by a predetermined distance, and a phosphor layer formed on a surface of the anode electrode; and a display panel including a non-emissive device which is installed in front of the anode electrode and realizes an image by controlling the transmission of light supplied from the light emitting device.

According to another aspect of the present embodiments, there is provided a flat display apparatus including: a light emitting device using electron emission which includes a monocrystalline substrate which is completely doped with p-type impurities, a plurality of PN junctions being formed in the monocrystalline substrate by diffusing n-type impurities into a surface of the monocrystalline substrate, an anode electrode opposite the monocrystalline substrate, and a phosphor layer formed on a surface of the anode electrode; and a display panel including a non-emissive device which is installed in front of the anode electrode and realizes an image by controlling the transmission of light supplied from the light emitting device. The non-emissive device may be a liquid crystal device.

The above and other features and advantages of the present embodiments will become more apparent from the following detailed description of exemplary embodiments thereof given with reference to the attached drawings in which:
Figure 1 is a schematic cross-sectional view of a conventional surface conduction emitter (SCE) type light emitting device using electron emission;
Figure 2 is an enlarged view of a portion II of Figure 1;
Figure 3 is a schematic cross-sectional view of a light emitting device using electron emission according to a first embodiment of the invention;
Figure 4 is a graph illustrating current characteristics of a PN junction used in the light emitting device of Figure 3;
Figure 5 is a schematic cross-sectional view of a light emitting device using electron emission according to a second embodiment;
Figure 6 is a schematic cross-sectional view of a light emitting device using electron emission according to a third embodiment;
Figure 7 is a perspective view of a flat display apparatus including a light emitting device using electron emission according to an embodiment; and
Figure 8 is a cross-sectional view taken along line VIII-VIII of Figure 7.

The present embodiments provide a light emitting device using electron emission with a low driving voltage and high luminous efficiency, and a flat display apparatus using the light emitting device.

The present embodiments also provide a light emitting device using electron emission with a nano-sized gap that can be formed with repeatability and have reliability.

Figure 3 is a schematic cross-sectional view of a light emitting device 30 using electron emission according to a first embodiment. Figure 4 is a graph illustrating current characteristics of a PN junction 31 used in the light emitting device 30 of Figure 3.

Referring to Figure 3, the light emitting device 30 includes the PN junction 31, an anode electrode 12, and a phosphor layer 13.

The PN junction 31 includes a depletion layer 34 having a predetermined thickness in an area where a p-type semiconductor and an n-type semiconductor are bonded. The anode electrode 12 faces the depletion layer 34 and is separated from the depletion layer 34 by a predetermined distance. The phosphor layer 13 is attached to a surface of the anode electrode 12. The thickness of the depletion layer 34 may be from about 1 nm to about 100 nm.

The light emitting device 30 may further include a substrate 11 on which the anode electrode 12 and the phosphor layer 13 are sequentially formed. The PN junction 31 and the substrate 11 face each other with a space 35 therebetween. A plurality of spacers 36 may be formed between the PN junction 31 and the substrate 11 to maintain the space 35 therebetween.

When a reverse-biased voltage is applied as illustrated in Figure 3, very little current flows in a reverse direction due to the current characteristics of the PN junction 31, as illustrated in the graph of Figure 4. In particular, if a voltage range is limited to the area indicated by dotted lines in Figure 4, the reverse-biased voltage does not reach a breakdown voltage. Thus, although an electric field is formed in the depletion layer 34, current does not flow. In this state, if a high positive voltage is applied to the anode electrode 12, charge carriers that comprise electrons are emitted from the n-type semiconductor toward the p-type semiconductor due to an electron tunneling effect. Then, the electrons accelerate toward the anode electrode 12.

The light emitting device 30 may generate visible light as follows.

The light emitting device 30 may operate in a similar manner to a conventional field emission device (FED). In other words, as illustrated in Figure 3, a negative voltage is applied to the p-type semiconductor, and a positive voltage is applied to the n-type semiconductor. Then, due to the electron tunneling effect, electrons are emitted from the nano-sized depletion layer 34 between the p-type semiconductor and the n-type semiconductor. At this time, a positive voltage higher than the positive voltage applied to the n-type semiconductor is applied to the anode electrode 12 such that the emitted electrons travel toward the anode electrode 12. The electrons traveling toward the anode electrode 12 are accelerated by the high positive voltage applied to the anode electrode 12 and excite the phosphor layer 13 covering the anode electrode 12, thereby generating optical radiation comprising visible light.

To generate visible light in this way, the phosphor layer 13 is formed of a cathode luminescence (CL)-type phosphor, which can be a red phosphor such as 'SrTiO₃:Pr,' 'Y₂O₃:Eu' or 'Y₂O₃S:Eu,' a green phosphor such as 'Zn(Ga, Al)₂O₄:Mn,' 'Y₃(Al, Ga)₅O₁₂:Tb,' 'Y₂SiO₅:Tb' or 'ZnS:Cu,AI,' or a blue phosphor such as 'Y₂SiO₅:Ce,' 'ZnGa₂O₄' or 'ZnS:Ag,CI.' A proper color arrangement allows the formation of pixels and the realization of an image.

Also, the space 35 formed between the PN junction 31 and the substrate 11 is maintained at a high vacuum, with a pressure of about 10⁻⁷ Torr or less.

The light emitting device 30 may generate visible light using another method. That is, according to another embodiment, the space 35 between the PN junction 31 and the substrate 11 is filled with an excitation gas. Electrons emitted from the depletion layer 34 and accelerated by the anode electrode 12 excite the excitation gas, and ultraviolet (UV) rays are generated as a result. Then, the UV rays excite the phosphor layer 13 to generate visible light.

To generate visible light in this way, the phosphor layer is formed of a photo luminescence (PL)-type phosphor that can includes red phosphor such as Y(V, P)O₄:Eu⁺³, a green phosphor such as Zn₂SiO₄:Mn and YBO₃:Tb, and a blue phosphor such as BaMgAl₁₀O₁₇:Eu.

To be excited by electrons and thus generate UV rays, the excitation gas may be formed of at least one or more gases selected from Xe, N₂, D₂, CO₂, H₂, CO, Kr, and air.

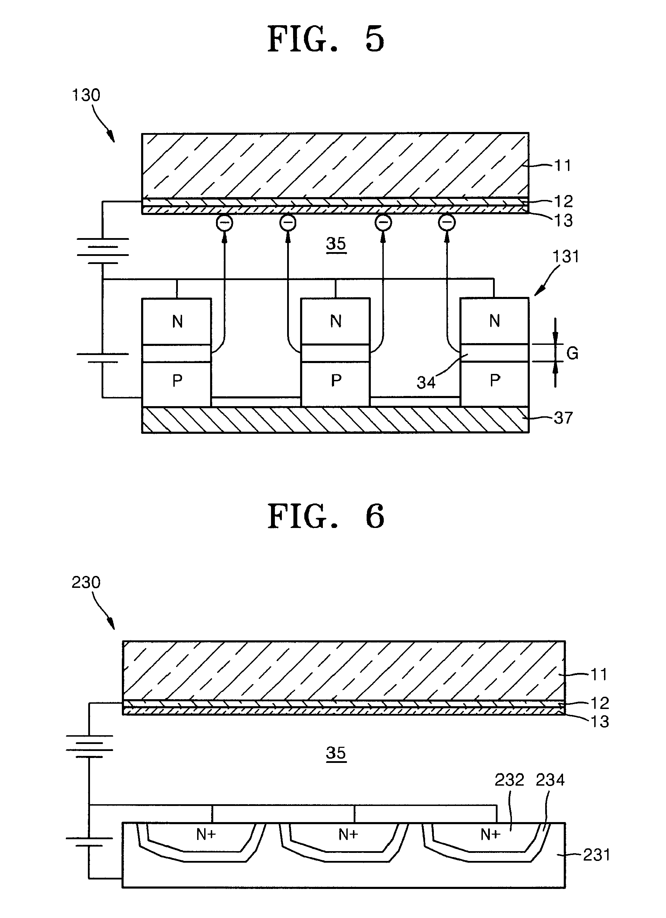

Figure 5 is a schematic cross-sectional view of a light emitting device 130 using electron emission according to a second embodiment.

Referring to Figure 5, the light emitting device 130 includes a plurality of PN junctions 131, an anode electrode 12, and a phosphor layer 13. The light emitting device 130 may further include a first substrate 37 on which the PN junctions 37 are formed, a second substrate 11 on which the anode electrode 12 and the phosphor layer 13 are sequentially formed, and a plurality of spacers (not shown) which maintain the space 35 between the first substrate 37 and the second substrate 11. The first substrate 37 and the second substrate 11 may be sealed with glass frit. The light emitting device 130 can also generate visible light using the two methods described above.

Figure 6 is a schematic cross-sectional view of a light emitting device 230 using electron emission according to a third embodiment.

Referring to Figure 6, the light emitting device 230 includes a monocrystalline substrate 231, an anode electrode 12, and a phosphor layer 13. The entirety of the monocrystalline substrate 231 is doped with p-type impurities, and PN junctions are formed on a surface of the monocrystalline substrate 231. The PN junctions each include a depletion layer 234 having a predetermined thickness, and the depletion layer 234 is formed by diffusing n-type impurities 232 into the surface of the monocrystalline substrate 231. The anode electrode 12 is opposite the monocrystalline substrate 231, and the phosphor layer 13 is attached to a surface of the anode electrode 12. The light emitting device 230 may further include a front substrate 11 on which the anode electrode 12 and the phosphor layer 13 are sequentially formed, and the thickness of the depletion layer 234 may be from about 1 nm to about 100 nm. Since the n-type impurities 232 are diffused into the surface of the monocrystalline substrate 231, the depletion layer 234 is exposed toward the front substrate 11. Electrons are emitted from the depletion layer 234 and travel toward the anode electrode 12. As described above, these electrons cause visible light to be generated.

According to the third embodiment, a light emission space 35 is defined by the front substrate 11 and the monocrystalline substrate 231. In the present embodiment, a plurality of spacers (not shown) may be used, and the front substrate 11 and the monocrystalline substrate 231 may be sealed with glass frit (not shown).

The light emitting devices 30, 130, and 230 described above may be used as a surface light source of a predetermined size. In particular, the light emitting device 30, 130, and 230 may be used as a back light unit (BLU), i.e., a surface light source of a liquid crystal display (LCD).

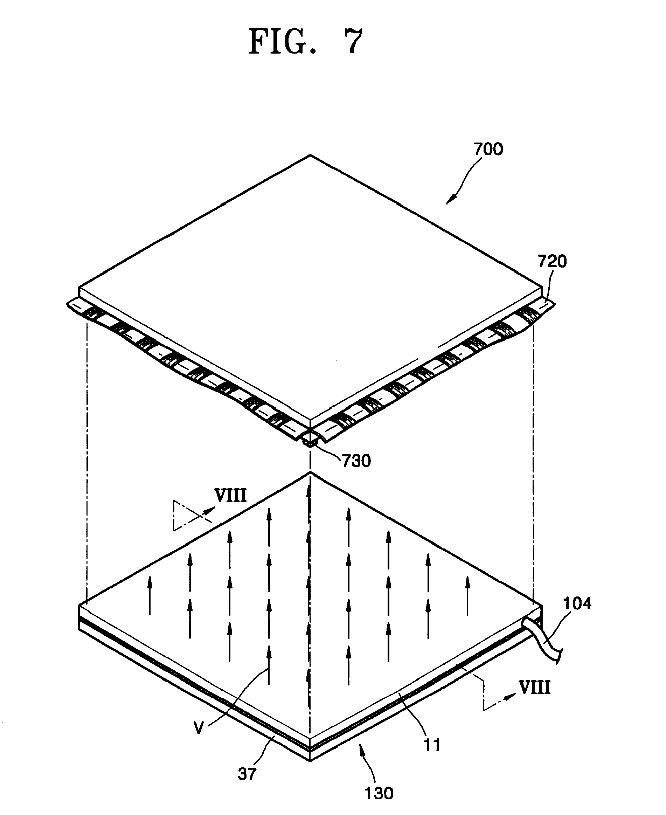

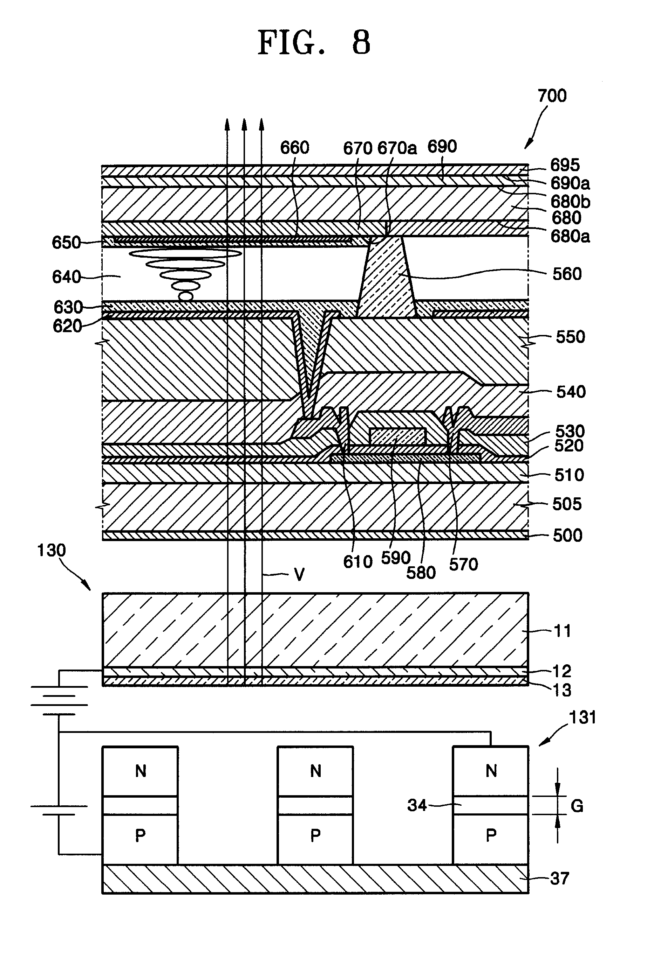

Figure 7 is a perspective view of a flat display apparatus including a light emitting device using electron emission as a BLU. Figure 8 is a cross-sectional view taken along line VIII-VIII of Figure 7. Identical names are used for elements of the flat display apparatus illustrated in Figure 7 and 8, which correspond to the elements described above, such as first substrate, a second substrate, and a spacer. However, different reference numerals are used. Elements included in an LCD panel 700, which will be described as an example, can be clearly distinguished by reference numerals.

Referring to Figure 7, the flat display apparatus includes the LCD panel 700 as a light receiving/generating display panel and a BLU which supplies light to the LCD panel 700. A flexible printed circuit board (FPCB) 720 that transmits an image signal is attached to the LCD 700, and a spacer 730 that maintains a gap between the LCD panel 700 and the BLU disposed at the back of the LCD panel 700.

The BLU is the light emitting device 130 described above and is supplied with power through a connection cable 104. The BLU emits visible light V through the second substrate 11 disposed on a front surface of the light emitting device 130 such that the emitted visible light V can be supplied to the LCD panel 700.

The configuration and operation of the LCD panel 700 will now be described in detail with reference to Figure 8.

The light emitting device 130 illustrated in Figure 8 may or may not be identical to the light emitting device 130 illustrated in Figure 5. In other words, the light emitting device 130 in Figure 8, may include the first substrate 37 and the second substrate 11 which are separated from each other by a predetermined height and form a predetermined space 35 therebetween. Since the configurations of the first and second substrates 37 and 11 and elements installed thereon can be identical to those of the elements of the light emitting device 130 according to the second embodiment, a detailed description thereof will not be repeated. In the light emitting device 130 according to the second embodiment, electrons are emitted from the depletion layer 34 due to an electric field formed between the n-type semiconductor, the p-type semiconductor and the anode electrode 12. As the emitted electrons collide with the phosphor layer 13, the visible light V is generated. The generated visible light V travels toward the LCD panel 700 disposed in front of the light emitting device 130.

The LCD panel 700 includes a first substrate 505. A buffer layer 510 is formed on the first substrate 505, and a semiconductor layer 580 is formed in a predetermined pattern on the buffer layer 510. A first insulating layer 520 is formed on the semiconductor layer 580, a gate electrode 590 is formed in a predetermined pattern on the first insulating layer 520, and a second insulating layer 530 is formed on the gate electrode 590. After the second insulating layer 530 is formed, the first and second insulating layers 520 and 530 are etched through an etching process such as a dry-etching process, thereby exposing a portion of the semiconductor layer 580. A source electrode 570 and a drain electrode 610 are formed above and extend down to the exposed portion of the semiconductor layer 580. After the source electrode 570 and the drain electrode 610 are formed, a third insulating layer 540 is formed, and a planarization layer 550 is formed on the third insulating layer 540. The third insulating layer 540 and a portion of the planarization layer 550 are etched, and the first electrode 620 is formed in a predetermined pattern on the planarization layer 550 such that the drain electrode 610 and the first electrode 620 contact each other. A transparent second substrate 680 is manufactured separately from the first substrate 505, and a color filter layer 670 is formed on a bottom surface 680a of the second substrate 680. The second electrode 660 is formed on a bottom surface 670a of the color filter layer 670, and a first alignment layer 630 and a second alignment layer 650 which are used to align molecules of liquid crystal in a liquid crystal layer 640 are respectively formed on surfaces of the first and second electrodes 620 and 660 that face each other. A first polarizing layer 500 is formed on a bottom surface of the first substrate 505, and a second polarizing layer 690 is formed on a top surface 680b of the second substrate 680. A protective film 695 is formed on a top surface 690a of the second polarizing layer 690. A spacer 560 that defines the liquid crystal layer 640 is interposed between the color filter layer 670 and the planarization layer 550.

A potential difference is generated between the first electrode 620 and the second electrode 660 by an external signal which is controlled by the gate electrode 590, the source electrode 570, and the drain electrode 610. The potential difference determines the alignment of the liquid crystal layer 640, and the visible light V supplied to the BLU 130 is blocked or transmitted according to the alignment of the liquid crystal layer 640. When the visible light V that has transmitted through the liquid crystal layer 640 passes through the color filter layer 670, it becomes colored, thereby forming an image.

The LCD panel 700 is illustrated in Figure 8 as an example. However, a display panel used in the flat display apparatus is not limited thereto. Diverse non-emissive display panels may be used in the flat display apparatus.

The flat display apparatus which includes the light emitting device using electron emission as a BLU can produce an image with enhanced brightness and have a longer life as a result of an increase in the brightness and lifetime of the BLU.

As described above, the present embodiments provide a light emitting device which can display an image using electron emission. The light emitting device can display an image in different ways using a phosphor layer which is formed of a different material according to whether an internal space is maintained in a vacuum state or whether the space is filed with an excitation gas.

In addition, the light emitting device has a structure that allows a nano-sized gap to be easily formed using a depletion layer of a PN junction.

The light emitting device according to the present embodiments can operate as follows. The space inside the light emitting device is filled with the excitation gas, the excitation gas is excited by electrons, and UV rays are generated by the exited excitation gas. The UV rays cause the phosphor layer to generate visible light. The light emitting device has far better energy efficiency than a conventional PDP which generates plasma discharge to generate UV rays, excite a phosphor layer using the UV rays, and thus generate visible light.

While the present embodiments have been particularly shown and described with reference to exemplary embodiments thereof, it will be understood by those of ordinary skill in the art that various changes in form and details may be made therein without departing from the scope of the present invention as defined by the following claims.

## Claims

**1.** A light emitting device, the device comprising:
a plurality of PN junctions (34) to be biased to emit charge carriers;
an electrode arrangement (12) facing and spaced from the PN junctions; and
a phosphor layer (13) to emit optical radiation in response to charge carriers from the PN junctions that travel toward the electrode arrangement.

**2.** The device of claim 1, further comprising:
a substrate (11) supporting the electrode and the phosphor layer; anda spacer (36) maintaining a gap between the PN junction and the substrate.

**3.** The device of claim 1, further comprising:
a first substrate (37) on which the PN junctions are formed;
a second substrate (11) supporting the anode electrode and the phosphor layer; and
a spacer maintaining a gap between the first substrate and the second substrate.

**4.** The device of any preceding claim, wherein the space between the electrode and the PN junctions is maintained in a vacuum, and the phosphor layer is excited by accelerated electrons and generates visible light.

**5.** The device of claim 4, wherein the phosphor layer is formed of a cathode luminescence (CL)-type phosphors that comprises a red phosphor selected from the group consisting of 'SrTiO₃:Pr,' 'Y₂O₃:Eu' or 'Y₂O₃S:Eu,' a green phosphor selected from the group consisting of 'Zn(Ga, Al)₂O₄:Mn,' 'Y₃(Al, Ga)₅O₁₂:Tb,' 'Y₂SiO₅:Tb' or `ZnS:Cu,AI,' and a blue phosphor selected from the group consisting of 'Y₂SiO₅:Ce,' 'ZnGa₂O₄' or `ZnS:Ag,CI.'

**5.** The device of claim 1, 2 or 3 wherein a space between the electrode and the PN junctions is filled with an excitation gas, the excitation gas is excited by accelerated electrons, and the phosphor layer is excited by ultraviolet (UV) rays emitted from the excitation gas and generates the visible light.

**6.** The device of claim 5, wherein the excitation gas is formed of at least one or more gases selected from the group consisting of Xe, N₂, D₂, CO₂, H₂, CO, Kr, and air.

**7.** The device of claim 5 or 6, wherein the phosphor layer is formed of a photo luminescence (PL)-type phosphor that comprises Y(V, P)O₄:Eu⁺³, a green phosphor selected from the group consisting of Zn₂SiO₄:Mn and YBO₃:Tb, and BaMgAl₁₀O₁₇:Eu.

**8.** The device of any preceding claim, wherein the PN junctions provide a depletion layer of a thickness from about 1 nm to about 100 nm.

**9.** The light emitting device of any preceding claim comprising:
a monocrystalline substrate with said plurality of PN junctions formed therein;
wherein said electrode comprises an anode electrode opposite the monocrystalline substrate; and
the phosphor layer is formed on a surface of the anode electrode.

**10.** The device of claim 9, further comprising a front substrate configured to support the anode electrode and the phosphor layer, wherein the space between the front substrate and the monocrystalline substrate is maintained in a vacuum, and the phosphor layer is excited by accelerated electrons and generates visible light.

**11.** The device of any preceding claim configured as a backlight for a liquid crystal display.

**12.** The device of any preceding claim comprising a flat display apparatus further including a display panel comprising a non-emissive device configured to be installed in front of the electrode.

**13.** The flat display apparatus of claim 12, wherein the non-emissive device is a liquid crystal device.
